# EUROPÄISCHE PATENTSCHRIFT

(11) **EP 2 167 598 B1**
(45) Veröffentlichungstag und Bekanntmachung des Hinweises auf die Patenterteilung: **22.02.2012**
(21) Anmeldenummer: 08784754.7
(22) Anmeldetag: 14.07.2008
(51) Int. Cl.: C09J 7/00

(54) **KLEBSTOFFZUSAMMENSETZUNG MIT EINSTELLBARER TRENNKRAFT SOWIE DEREN VERWENDUNG**
ADHESIVE COMPOSITION WITH ADJUSTABLE SEPARATING FORCE AND USE THEREOF
COMPOSITION D'ADHÉSIF À FORCE D'ANTI-ADHÉRENCE RÉGLABLE AINSI QUE SON UTILISATION

(30) Priorität: 14.07.2007 DE 102007032955
(43) Veröffentlichungstag der Anmeldung: 31.03.2010
(73) Patentinhaber: Fraunhofer-Gesellschaft zur Förderung der angewandten Forschung e.V., 80686 München (DE)
(72) Erfinder: HARTWIG, Andreas, 27721 Ritterhude (DE); ALBINSKY, Kerstin, 28844 Weyhe (DE); SEBALD, Monika, 27721 Ritterhude (DE)
(86) Internationale Anmeldenummer: PCT/EP2008/005734
(87) Internationale Veröffentlichungsnummer: WO 2009/010261

(56) Entgegenhaltungen:
- EP-A- 1 882 707
- WO-A-2004/056881
- WO-A-2006/065373

## Beschreibung

### Technisches Gebiet

Die Erfindung betrifft eine Klebstoffzusammensetzung mit einstellbarer Trennkraft, die eine wässrige Polymerdispersion und anorganische Partikel, bevorzugt Nanopartikel, enthält sowie dessen Verwendung.

### Stand der Technik

Haftklebstoffe zum Kleben von Papier und anderen Substraten sind üblicherweise auf eine hohe Festigkeit und Permanenz ausgerichtet. Beispielhaft seien die Haftklebstoffe für Etiketten oder Dekorfolien genannt. Dies wird dadurch erreicht, dass zu den verwendeten Basispolymeren Haftharze, so genannte Tackifier, zugesetzt werden.

Es gibt aber auch Anwendungen, bei denen auf eine geringe Trennkraft und gute Ablösbarkeit Wert gelegt wird. Das wichtigste Beispiel sind die bekannten Haftnotizen. Der hierfür verwendete Klebstoff besteht aus Polymerkugeln mit niedriger Glasübergangstemperatur und Durchmessern von etwa 5 bis 50 µm. Diese Kugeln sind teilweise vernetzt und bleiben daher nach der Applikation auf dem Trägersubstrat bestehen, verfilmen also nicht zu einer gleichmäßigen Schicht. Bis auf die Permanenz der Kugelgestalt unterschieden sich derartige Klebstoffe nicht grundsätzlich von der Zusammensetzung anderer Haftklebstoffe. Derartige Klebstoffe sind z.B. in der US 3,691,140 und der DE 28 36 319 C2 offenbart. Aufgrund der Kugelform ist die Kontaktfläche mit dem zu beklebenden Substrat gegenüber einer gleichmäßigen Schicht deutlich reduziert, was die Hauptursache für die geringen Trennkräfte ist.

Die Kugelform hat jedoch gegenüber einer geschlossenen Schicht den Nachteil, dass auch die Haftung auf dem Trägermaterial (z.B. dem Notizzettel) gering ist. Hierdurch erfolgt ein Übertrag des Klebstoffes auf das zu beklebende Substrat, so dass nach dem Entfernen des Notizzettels Reste verbleiben, die die Oberflächen verschmutzen. Zudem nimmt die Klebstoffmenge auf dem selbstklebenden Notizzettel ab, wodurch die Haftung beim erneuten Anbringen auf einem Substrat verringert wird.

Der leichte Übertrag des Klebstoffes auf ein Substrat hat außerdem die Folge, dass beim Fertigen von Blöcken oder Rollen aus selbstklebend ausgerüstetem Papier oder Folie eine Releaseschicht (Anti-HaftSchicht) auf der nicht klebend ausgerüsteten Seite aufgebracht werden muss. Da diese Releaseschicht in den meisten Fällen noch beschreibbar sein soll, müssen hier einander völlig entgegen gesetzte Anforderungen erfüllt werden. Diese zusätzliche Schicht ist mit hohen Kosten verbunden.

Bei der maschinellen Applikation von mit derartigen Klebstoffen versehenen Papieren oder Folien hat der leichte Übertrag des Klebstoffes einen weiteren entscheidenden Nachteil, nämlich die Verschmutzung der Maschinenteile über die die mit Klebstoff versehenen Materialien geführt werden müssen. Hierdurch ist ein sehr hoher Reinigungsaufwand erforderlich oder ein maschineller Transport dieser Trägermaterialien überhaupt nicht möglich. Dies betrifft insbesondere selbstklebende rollenförmige Druckmedien wie z.B. Kassenrollen. Bei der Verwendung der nach dem Stand der Technik bekannten Haftklebstoffe mit niedriger Haftkraft zur Ausrüstung derartiger Kassenrollen, wäre eine häufige Reinigung des Papiertransportmechanismus der Kassen erforderlich.

In der DE 102 59 460 A1 = WO 2004/056881 A1 wird der Zusatz von Nanopartikeln zu einer Haftklebemasse beschrieben, um deren Kohäsion und Schneidbarkeit zu erhöhen. Dies wird dadurch erreicht, dass das Acrylat in homogener Phase in Gegenwart eines organischen nicht wässrigen Lösemittels polymerisiert wird.

### Beschreibung

Der Erfindung liegt daher die Aufgabe zugrunde, die Nachteile des Standes der Technik zumindest teilweise zu vermeiden und eine Klebstoffzusammensetzung, die, nachdem sie auf ein Trägermaterial appliziert wurde, nur eine relativ niedrige Klebkraft aufweist sowie einen Gegenstand mit einer derart applizierten Klebschicht anzugeben. Bevorzugt sollte die Klebstoffzusammensetzung ermöglichen, dass hieraus Trägermaterialien mit einer Klebschicht hergestellt werden können, bei denen auf eine Releaseschicht verzichtet werden kann. Gegenstand der Erfindung sind Klebstoffzusammensetzungen gemäß den Ansprüchen 1-8, sowie Verfahen zur Herstellung eines beschichteten flächigen Gegenstands gemäß den Ansprüchen 9-13.

Der beschichtete flächige Gegenstand ist erhältlich durch Beschichtung eines flächigen Trägermaterials mit einer Klebstoffzusammensetzung, anschließender Trocknung des so beschichteten Trägermaterials und gegebenenfalls an die Trocknung anschließende Nachbehandlung. Zunächst wird die hierfür verwendete Klebstoffzusammensetzung näher beschrieben.

Erfindungsgemäß enthält die Klebstoffzusammensetzung eine Polymerdispersion, wobei das in der Polymerdispersion enthaltene Polymer eine Glasübergangstemperatur kleiner 20 °C aufweist, sowie anorganische Partikel mit einer mittleren Partikelgröße zwischen 1 nm und 50 µm.

Überraschend hat sich gezeigt, dass mit derartigen Mischungen Klebschichten auf Substraten hergestellt werden können, die reduzierte Klebkräfte aufweisen - insbesondere reduziert gegenüber der Klebkraft einer Zusammensetzung, die keine anorganischen Partikel enthält. Diese Klebkräfte können durch die Menge und Art der anorganischen Partikel gezielt eingestellt werden. Wird die erfindungsgemäße Klebstoffzusammensetzung auf ein Trägermaterial aufgetragen, so wird nach dem Trocknen eine selbstklebende Schicht mit geringer Klebkraft erhalten. Anders als bei den Klebstoffzusammensetzungen mit geringer Klebkraft nach dem Stand der Technik wird diese nicht teilweise auf ein zu beklebendes Substrat übertragen und deren Bestandteile lagern sich auch nicht in Maschinen, die das beschichtete Trägermaterial enthalten (z.B. Registrierkassen) zum Beispiel in den Transportvorrichtungen ab. Die erfindungsgemäße Klebstoffzusammensetzung zeichnet sich daher insbesondere dadurch aus, dass sie, nachdem sie auf das Trägermaterial aufgebracht und getrocknet ist, auf dem Trägermaterial so fest haftet, dass kein Übertrag der entstandenen Klebschicht oder eines Teils der Klebschicht bzw. eines Teils der in der Klebschicht enthaltenen Komponenten auf ein zu beklebendes Substrat erfolgt. Die resultierende Haftkraft auf gestrichenem Papier als Substrat, gemessen mit einem 180° Schältest und einer Prüfgeschwindigkeit von 80 mm/min, beträgt hierbei im Regelfall maximal 0,06 N/mm.

Die Klebstoffzusammensetzung hat auch den Vorteil, dass bei einem mit dieser Klebstoffzusammensetzung beschichteten flächigen Gegenstand auf die nach dem Stand der Technik erforderliche Releaseschicht (Anti-Haft-Schicht) verzichtet werden kann.

Werden anorganische Partikel mit einer Primärpartikelgröße kleiner 100 nm (Nanopartikel) eingesetzt, so wird mit der Polymerdispersion eine Beschichtung erhalten, die transparent ist, was beispielsweise bei der Beschichtung von Folien vorteilhaft ist. Zudem erlauben derartige Formulierungen besonders dünne und homogene Klebstoffschichten.

Die erfindungsgemäßen auf wässrigen Polymerdispersionen basierenden Klebstoffzusammensetzungen unterscheiden sich grundsätzlich von lösemittelbasierten Haftklebstoffen, da diese Polymerdispersionen heterogene Systeme sind, die zur Stabilisierung der Suspension meist noch Tenside und/oder ionische Gruppen beinhalten. Im Unterschied zur WO 2004/056881 A1 kommt es bei der erfindungsgemäßen Zusammensetzung auch nicht darauf an, dass die Kohäsionskraft erhöht wird. Vielmehr ist wesentlich, dass durch eine geeignete Wahl der Bestandteile der Klebstoffzusammensetzung die Klebkraft (d.h. die Adhäsionskraft) eingestellt werden kann und insbesondere gegenüber der entsprechenden Zusammensetzung, die keine anorganischen Partikel enthält, herabgesetzt werden kann.

Zur Herstellung der erfindungsgemäßen Klebstoffzusammensetzung werden eine oder mehrere wässrige Polymerdispersionen mit den feinpartikulären anorganischen Partikeln versetzt und solange vermischt, bis eine homogene Mischung vorliegt.

Bevorzugt beträgt der Anteil der anorganischen Partikel in der Klebstoffzusammensetzung maximal 50 Gew.-%, bezogen auf den Polymergehalt der Polymerdispersion. Besonders bevorzugt beträgt der Anteil der anorganischen Partikel 0,5 bis 15 Gew.-%, bezogen auf den Polymergehalt der Polymerdispersion. Bei höheren Gehalten wird die Klebkraft im Regelfall zu gering, bei niedrigeren Gehalten ist im Regelfall keine ausreichende Wirkung mehr festzustellen.

Erfindungsgemäß werden wässrige Polymerdispersionen, wobei das Polymer eine Glasübergangstemperatur unter 20°C aufweist, eingesetzt. Die Glasübergangstemperatur wird hierbei gemäß DIN 53765 bestimmt. Bevorzugt liegt die Glasübergangstemperatur unter 0°C; da ansonsten bei den üblichen Nutzungstemperaturen keine oder eine mit der Temperatur stark schwankende Klebfestigkeit vorliegt.

In einer Ausführungsform ist die mittlere Partikelgröße der Polymere dieser Polymerdispersionen für den beschichteten flächigen Gegenstand und die Klebstoffzusammensetzung 20 bis 700 nm, bevorzugt 50 bis 400 nm und besonders bevorzugt 50 bis 200 nm. Wie alle anderen zu dieser Erfindung angegebenen Partikelgrößen wird diese bestimmt durch Lichtstreuung gemäß folgender Literaturstellen: L. B. Aberle et al. in Phys. Chem. Chem. Phys. 1999, 1, 3917-3921; L. B. Aberle et al. in Applied Optics 1998, 37, 6511-6524. Die Polymerdispersion für den Polymerfilm des beschichteten flächigen Gegenstands enthält bevorzugt Polymere, die Polyacrylate, Polymethacrylate, Polyisopren, Polybutadien, Polyisobutylen, Polydimethylsiloxan oder Polyurethan als Hauptkomponente (d. h. größer 50 Gew.-%) oder als einzige Komponente enthalten. Es ist dabei auch möglich, dass die genannten Polymere als Hauptkomponenten in einem Copolymeren vorliegen.

Besonders bevorzugt sind wässrige Polymerdispersionen auf Basis von substituierten oder unsubstituierten Acryl-Monomeren (z.B. Acrylsäure- oder Methacrylsäureestern), insbesondere Polymerdispersionen, die ein Polyacrylat und/oder ein Polymethacrylat als Hauptkomponente (größer 50 Gew.-%) enthalten oder hieraus bestehen. Auch hier sind die reinen Polymere, Gemische mit anderen Polymeren oder Copolymere dieser Stoffe geeignet.

Polymerdispersionen, die Polychloropren als Hauptkomponente enthalten oder daraus bestehen, sind für die erfindungsgemäße Klebstoffzusammensetzung nicht geeignet, da sich beim Zusatz von Nanopartikeln hierbei die Klebkraft stark erhöht.

Die wässrige Polymerdispersion kann auch Polymere enthalten, in denen Comonomere enthalten sind, die alleine polymerisiert höhere Glasübergangstemperaturen aufweisen als 20°C. Wesentlich ist lediglich, dass die Glasübergangstemperatur des Polymers aus dem die eingesetzte Polymerdispersion besteht kleiner als 20°C ist.

Als Comonomere sind beispielsweise folgende Substanzen geeignet: Acrylsäure, Methacrylsäure, Styrol, Methylmethacrylat, Ethylacrylat und/oder Isobornylacrylat.

Weiterhin bevorzugt ist das Hauptmonomer oder das ausschließliche Monomer, auf dem die Polymerdispersion beruht, ein Acrylat oder ein Methacrylat mit einem Kohlenwasserstoffrest, der mehr als 6 Kohlenstoffatome beinhaltet. Hier sind wiederum Kohlenwasserstoffreste mit 6 bis 12 Kohlenstoffatomen bevorzugt, im Regelfall handelt es sich bei diesen Kohlenwasserstoffresten ferner um verzweigte, unverzweigte oder cyclische Alkyl-Reste. Besonders bevorzugt sind Polymerdispersionen auf Basis von Isooctylacrylat als Hauptmonomer oder einzigem Monomer.

Der beschichtete flächige Gegenstand aus Trägermaterial und Beschichtung ist dadurch gekennzeichnet, dass die Beschichtung einen Polymerfilm aufweist, wobei der Polymerfilm in einer 48-stündigen Behandlung bei Raumtemperatur mit einem für entsprechende Oligomere der im Polymerfilm enthaltenen Monomere geeigneten Lösungsmittel zu mindestens 50%, bezogen auf den gesamten Polymergehalt, nicht löslich ist und das Polymer eine Glasübergangstemperatur kleiner 20°C aufweist und in der Beschichtung anorganische Partikel mit einer mittleren Primärpartikelgröße zwischen 1 nm und 50 µm enthalten sind.

In einer Ausführungsform ist der Polymerfilm zu mindestens 80%, bevorzugt zu mindestens 90% nicht löslich.

Unter Oligomeren werden erfindungsgemäß Verbindungen verstanden, in deren Molekülen nur wenige Monomereinheiten(konstitutionelle Einheiten) gleicher oder verschiedener Art wiederholt miteinander verknüpft sind und deren physikalische Eigenschaften sich durch Hinzufügen oder Wegnahme einer oder mehrere konstitutioneller Einheiten deutlich ändern (Römpp Chemielexikon, 9., erw. und neubearb. Aufl., Hrsg. J. Falbe u. M. Regnitz, Georg Thieme Verlag Stuttgart 1991, S. 3107 f)). Ein Oligomer im Rahmen dieser Erfindung soll einen Polymerisationsgrad von weniger als 100 haben, also aus weniger als 100 Widerholeinheiten bestehen.

Polymere mit gleicher Basiszusammensetzung, die eine niedrige bis mittlere Molmasse haben und nicht vernetzt sind, lösen sich in Lösemitteln. Typische Lösemittel für Polyacrylate (die wichtigsten Polymere für Haftklebstoffe und damit auch die erfindungsgemäßen Anwendungen) sind z.B. Aceton, Methylethylketon oder Toluol. Die Unlöslichkeit in diesen Lösemitteln zeigt, dass die Polymere vernetzt sind oder so eine hohe Molmasse haben, dass sie unlöslich werden.

Die geeigneten Polymerdispersionen bilden getrocknete Polymerfilme, die zu mindestens 50%, bevorzugt mindestens 80%, besonders bevorzugt 90% vom Gesamtpolymeranteil, in dem Lösemittel, welches für niedermolekulare Polymere aus den gleichen Monomeren ein gutes Lösemittel ist, nach einer Behandlung von 48 h bei Raumtemperatur nicht löslich sind. Die aus diesen Dispersionen gebildeten Filme sind gering quellbar. Der nicht lösliche Anteil ist der Gelgehalt wie er für vernetzte Polymere üblicherweise bestimmt wird.

Ungeeignete Polymerdispersionen trocknen dagegen zu Filmen, die in den jeweiligen Lösemitteln löslich sind. Nicht geeignete Dispersionen besitzen keine oder nur sehr geringe Vernetzung und einen hohen lösbaren Polymeranteil (größer 50%). Diese verfilmten Dispersionen zeigen in den Lösemitteln die Oligomere aus den entsprechenden Monomeren lösen eine sehr starke Quellung und werden zumindest zu 50% innerhalb von 48 Stunden bei Raumtemperatur gelöst.

Beispielhaft sind hier die Dispersionen von Planatol HW 450, Collano DP 7027 und Collano 7024 zu nennen. Diese geeigneten Polymerdispersionen zeigen kein beziehungsweise nur ein sehr geringes Löse- und Quellungsverhalten in Ketonen wie Aceton, Methylethylketon, Alkoholen wie Ethanol, Isopropanol, in Aromaten wie Toluol sowie in Acetonitril als Lösungsmittel. Die Dispersionen koagulieren bei Einsatz obiger Lösungsmittel. Untersuchungen der Lösemittelphase (Aceton) zeigten Partikel mit einem Durchmesser von ca. 250 nm, die der dispersen Phase der eingesetzten Dispersion entsprechen. Hinweise auf lösliche Anteile gab es nicht.

Die partielle Unlöslichkeit des Polymers lehrt, dass partiell vernetzte, sehr hochmolekulare oder stark verzweigte Polymere notwendig sind, um die Erfindung auszuführen. Ohne die Erfindung auf eine bestimmte wissenschaftliche Theorie zu reduzieren, wird davon ausgegangen, dass die partielle Unlöslichkeit des Polymers dazu führt, dass sich Polymer und anorganische Partikel nicht homogen vermischen, sondern sich die Partikel bevorzugt an der Oberfläche der Polymerdispersionströpfchen befinden und somit die Klebkraft gezielt reduzieren. Dies erfolgt durch ein partielles Abdecken des Klebstoffes mit einer Partikelschicht, so dass die Kontaktfläche zum Substrat verringert ist.

In einer vorteilhaften Ausgestaltung enthält die erfindungsgemäße Klebstoffzusammensetzung eine Polymerdispersion, die filmbildend ist. Unter "filmbildend" wird hierbei verstanden, dass das der Dispersion zugrunde liegende Polymer nicht oder nur schwach vernetzt ist, solange es sich in der wässrigen Dispersion befindet. Weiterhin wird unter "filmbildend" verstanden, dass die Partikelgestalt der in der Polymerdispersion enthaltenen Polymerpartikel (die z.B. kugelförmig sein können) nach dem Trocknen der erfindungsgemäßen Klebstoffzusammensetzung verschwindet und die Polymerpartikel zu einer Schicht verflossen sind.

Derartige Klebstoffzusammensetzungen haben den Vorteil, dass eine homogene Klebschicht auf ein Trägermaterial aufgetragen werden kann und dass daher auch die Klebkraft der Klebschicht homogen ist.

Nach Applikation der Klebstoffzusammensetzung kann das der Dispersion zugrunde liegende Polymer selbstverständlich vernetzt werden, um z.B. die Eigenfestigkeit des Klebstoffs zu verbessern. Dies kann etwa durch UV- oder Elektronenbestrahlung erreicht werden oder durch Verwendung einer Polymerdispersion, die Comonomere oder andere Komponenten mit vernetzungsfähigen funktionellen Gruppen enthält. Beispielsweise kann Glycidylmethacrylat als Comonomer bei der Herstellung der Polymerdispersion eingesetzt werden. Die enthaltenen Epoxidgruppen können dann zur Vernetzung des aus der Klebstoffzusammensetzung hergestellten Klebfilms dienen. Bei dieser Ausführungsform ist aber zu beachten, dass die Molmassen so hoch sind, dass keine homogene Mischung mit den anorganischen Partikeln entsteht. Alternativ zu der hohen Molmasse kann die Oberfläche der anorganischen Partikel so gestaltet sein, dass eine thermodynamische Unverträglichkeit (nicht mischbar) zwischen Partikeln und Polymer besteht.

Als anorganische Partikel werden bevorzugt Oxide und/oder Silikate mit einer mittleren Primärpartikelgröße zwischen 1 nm und 5 µm, bevorzugt zwischen 5 nm und 100 nm, eingesetzt. Besonders geeignet sind beispielsweise Siliciumoxide, Aluminiumoxide, Titandioxide, Aluminiumsilikate, Magnesiumoxide, Bariumsulfat und/oder Zinkoxid. Unter einem Oxid und einem Silikat werden hierbei all die Metallsalze verstanden, die als Anionen ausschließlich Oxid- und/oder Silikationen oder neben Oxid- und/oder Silikationen auch andere Anionen aufweisen. Beispielsweise zählen zu den Oxiden insbesondere auch die Verbindungen, die Hydroxidgruppen und/oder (Kristall)Wasser beinhalten. Bevorzugt sind die anorganischen Partikel in Wasser nicht merklich löslich. Insbesondere sollte das Löslichkeitsprodukt L der zugrunde liegenden chemischen Verbindung in Wasser kleiner als 1*10⁻³, bevorzugt kleiner als 1*10⁻⁶ sein. Geeignet sind daher auch Metallsalze des Typs M(EOₙ)ₘ (wobei M ein Metall ist und E ein Nichtmetall, insbesondere Kohlenstoff oder Schwefel ist und wobei n und m ganze Zahlen zwischen 1 und 4 sind), die ein derartiges Löslichkeitsprodukt besitzen.

Ferner sollten die anorganischen Partikel nicht so groß sein, dass sie bei der weiteren Verarbeitung sedimentieren, da ansonsten vor der Weiterverarbeitung der Klebstoffzusammensetzung eine Trennung der Bestandteile erfolgen kann.

Aufgrund der hohen Viskosität, die bevorzugt zwischen 100 - 2000 mPa·s, gemessen nach ISO 3219 und/oder 100 - 5000 mPa·s gemessen nach Brookfield (Spindel 4, 50 U/min) und/oder 5 - 30 Pa·s (Spindel 5, 20 U/min) und/oder 100 - 5000 mPa·s (Spindel 3, 20 U/min) liegt, und des hohen Feststoffgehaltes der wässrigen Polymerdispersionen in der Klebstoffzusammensetzung, der bevorzugt einen Wert von 10 bis 70 %, besonders bevorzugt 30 bis 55 % aufweist, wird bei nahezu allen Kombinationen aus Polymerdispersionen und anorganischen Partikeln eine Sedimentation effektiv vermieden. Wie bei allen heterogenen Systemen ist ein Aufrühren kurz vor der Verarbeitung aber empfehlenswert.

Die anorganischen Partikel können in verschiedenen Zubereitungsformen vorliegen wie auch in wässrigen Dispersionen, bei Siliciumdioxid sind diese Zubereitungsformen beispielsweise Kieselsol, Quarzmehl, pyrogene Kieselsäure und/oder gefällte Kieselsäure und/oder anorganische Partikel, die in situ aus einer Silikatlösung oder einem Alkoxysilan erhalten worden sind.

Insbesondere pyrogene und gefällte Kieselsäure sind mit sehr unterschiedlichen spezifischen Oberflächen verfügbar. Besonders geeignet sind Typen mit spezifischen Oberflächen größer 25 m²/g und besonders bevorzugt zwischen 50 und 250 m²/g. Derartige Typen zeichnen sich durch eine gute Verteilbarkeit in der wässrigen Dispersion und sehr gute Stabilität der hergestellten Partikeldispersionen aus. Die spezifische Oberfläche wurde hierbei mittels BET-Bestimmung nach DIN 66131 bestimmt.

Die Partikel können der Polymerdispersion als trockenes Pulver zugegeben werden, oder aber in Wasser vordispergiert sein. Um ein Verklumpen beim Mischen der anorganischen Partikel mit der Polymerdispersion zu vermeiden, werden die anorganischen Partikel vor Zugabe zur Polymerdispersion bevorzugt in Wasser vordispergiert. Diese wässrige Dispersion der anorganischen Partikel kann eine Reihe von Hilfsstoffen beinhalten, um z.B. eine Sedimentation der anorganischen Partikel oder eine Unverträglichkeit mit der Polymerdispersion zu verhindern. Beispielsweise kann eine Anpassung des pH-Wertes an den pH-Wert der Polymerdispersion erfolgen; es können aber auch lösliche Polymere oder Tenside zugesetzt werden.

Liegen die anorganischen Partikel in Form von Agglomeraten vor, so können die Agglomerate aufgebrochen werden, indem die wässrigen Dispersionen stark geschert werden. Hierfür eignen sich beispielsweise Scheibendisolver, Kugelmühlen oder Rotor-Stator-Mischer. Die Dispersionen der anorganischen Partikel können aber auch in situ in der Polymerdispersion erzeugt werden. Hierzu kann beispielsweise von einer Silikatlösung, wie Natronwasserglas ausgegangen werden, die der Polymerdispersion zugesetzt wird. Anschließend wird der pH-Wert durch den Zusatz von Säure so weit erniedrigt, dass sich aus der Silikatlösung festes Siliciumdioxid bildet. Eine weitere Möglichkeit besteht im Zusatz von Alkoxysilanen zur Polymerdispersion; die Alkoxysilane hydrolysieren im wässrigen Medium und bilden ebenfalls Siliciumdioxid. Besonders Tetraalkoxysilane wie Tetraethoxysilan eignen sich für diese Variante.

Weiterhin kann zur Herstellung der erfindungsgemäßen Klebstoffzusammensetzung der wässrigen Polymerdispersion Kieselsol (z.B. Levasil der Firma H. C. Starck) zugesetzt werden. Diese Variante eignet sich besonders gut für die erfindungsgemäße Zusammensetzung, da Kieselsol aus einer Dispersion von kugelförmigen Siliciumdioxidpartikeln mit einem Durchmesser kleiner 100 nm in Wasser besteht und nicht weiter aufbereitet werden muss. Es ist außerdem sedimentationsstabil und der leicht alkalische pH-Wert korrespondiert gut mit dem pH-Wert vieler Polymerdispersionen. Schließlich ist Kieselsol nicht toxisch und preisgünstig.

Die Klebkraft der erfindungsgemäßen Klebstoffzusammensetzungen lässt sich durch den Zusatz verschiedener Additive weiter modifizieren. Außerdem können Mischungen verschiedener Polymerdispersionen und unterschiedliche Partikelgrößenverteilungen der in der Polymerdispersion enthaltenen Polymerpartikel einerseits und der anorganischen Partikel andererseits eingesetzt werden. Falls eine Erhöhung der Klebkraft notwendig sein sollte oder die Glasübergangstemperatur der Formulierung gesenkt werden soll, können beispielsweise als Additive die typischen Tackifier, also Klebharze, als Rohstoffe zugesetzt werden. Sie können beispielsweise bei der Herstellung der Polymerdispersion in diese eingebaut werden oder in Form einer Dispersion zugesetzt werden. Beispiele für derartige Klebharze sind Kolophoniumderivate oder Kohlenwasserstoffharze (z. B. Terpen-, Terpenphenol-, C₅-, C₉-, C₅/C₉-Kohlenwasserstoff-, Pinen- oder Inden-Harze).

Ferner kann ein Additiv zur Modifizierung der resultierenden Haftkraft eingesetzt werden. Dies kann insbesondere durch den Zusatz von Wachsdispersionen oder Silikonharzen erfolgen. Diese Substanzen führen meist zu einer Erniedrigung der Haftkraft und können in einer Kombination mit den anorganischen Partikeln vorteilhaft sein.

Weiterhin können Additive zur Verbesserung des Filmbildungsverhaltens zugesetzt werden. Geeignet sind hier beispielsweise in Wasser lösliche Polymere, insbesondere Polyacrylsäure, Polymethacrylsäure, Polyvinylalkohol oder Polyacrylamid und/oder davon abgeleitete Copolymere.

Gegenstand der Erfindung ist ebenfalls ein Verfahren zur Beschichtung eines flächigen Trägermaterials als flächigem Gegenstand mit der vorstehend beschriebenen Klebstoffzusammensetzung und anschließender Trocknung. Falls erforderlich, kann eine Nachbearbeitung erfolgen, beispielsweise durch Bildung eines Stapels mit mehreren Schichten des Trägermaterials oder Aufrollen einer Lage des Trägermaterials. Das Trägermaterial ist flächig ausgestaltet. Es hat damit eine Form nach Art einer Papierbahn oder eines Papierblatts, oder einer (Kunststoff-)Folie. Als Trägermaterial besonders bevorzugt sind alle Materialien, die als Bahnware beschichtet werden können. In Frage kommen als Trägermaterial für den beschichteten flächigen Gegenstand somit insbesondere Papier, Thermopapier, Pappe, Kunststofffolien, Verbundfolien, Schutzfolien und/oder Mischungen hiervon.

Als Trägermaterial kann auch ein flächiges Substrat dienen, das auf einer Seite mit der erfindungsgemäßen Klebstoffzusammensetzung und auf der anderen Seite mit einem Klebstoff mit einer hohen Haftkraft beschichtet ist oder wird, so dass ein Gegenstand nach Art eines Doppelklebebands oder einer Doppelklebefolie mit 2 Seiten unterschiedlicher Klebkraft entsteht. Dies ermöglicht es, jeglichen Gegenstand auf einfache Weise mit einer Klebschicht aus der erfindungsgemäßen Zusammensetzung zu versehen, indem das Doppelklebeband/die Doppelklebefolie mit der Schicht mit hoher Klebkraft auf eine Fläche dieses Gegenstands geklebt wird.

Bevorzugt für den beschichteten flächigen Gegenstand sind flächige Trägermaterialien mit einem Flächengewicht unter 250 g/m², besonders bevorzugt unter 100 g/m².

Aufgrund der geringen Klebkräfte können die beschichteten Träger (vom beklebten Substrat oder von einer weiteren Lage des beschichteten Trägermaterials) leicht entfernt werden, ohne dass ein Zerreißen aufgrund des geringen Flächengewichts zu befürchten ist. Gleiches gilt für das Abrollen einer mit der Klebstoffzusammensetzung beschichteten Rolle. Auch Thermopapier, das häufig ein geringes Flächengewicht aufweist, lässt sich gut beschichten, ohne dass es zu einer negativen Beeinflussung der Thermoschicht kommt.

Bevorzugt liegt das beschichtete flächige Trägermaterial des beschichteten flächigen Gegenstandes als Stapel und/oder Rolle vor. Die erfindungsgemäße Klebstoffformulierung ist besonders gut zur Herstellung von selbstklebenden Notizzetteln geeignet, welche in Form von Blöcken oder Rollen zur Verfügung gestellt werden. Bei diesen werden nach dem Stand der Technik die nicht mit Klebstoff versehenen Seiten mit einer Anti-Haft-Beschichtung (Releasebeschichtung) versehen, um einen Übertrag des Klebstoffes auf diese Seite zu vermeiden und ein leichteres Ablösen der Notizzettel vom Block im Vergleich zu anderen Oberflächen auf die die Notizzettel aufgebracht werden zu gewährleisten. Im Falle der Verwendung der erfindungsgemäßen Klebstofformulierungen und der damit hergestellten Erzeugnisse kann auf die Releaseschicht verzichtet werden, da der Klebstoffübertrag zu vernachlässigen ist. Um ein besonders leichtes Ablösen vom Block bei gleichzeitig benötigter höherer Klebkraft auf anderen Substraten zu gewährleisten, kann es aber sinnvoll sein auch eine Releaseschicht zu verwenden.

Die Erfindung beschriebt weiterhin die Verwendung der Klebstoffzusammensetzung zur Beschichtung von Gegenständen und/oder Trägermaterialien zur Erzeugung von selbstklebenden Gegenständen. Des Weiteren sind Schutzfolien für empfindliche Oberflächen, wie z.B. Linsen, Displays oder polierte Metalle bevorzugte Gegenstände. Auch zur Fixierung von Bauteilen für deren mechanische Bearbeitung sind die Klebstoffformulierungen gut geeignet. Besonders bevorzugt sind hier doppelseitig selbstklebend ausgerüstete Trägerfolien die sich bei der Bearbeitung der Bauteile zwischen diesen und dem Werkstückträger befinden. Diese Folien können an beiden Seiten eine selbstklebende Schicht mit unterschiedlicher Klebkraft haben, um so ein gezieltes Ablösen an einer Seite zu erreichen. Für derartige Anwendungen eignen sich auch sehr gut gummielastische Trägerfolien für den Klebstoff. Diese können dann mit Hilfe eines Anfassers besonders einfach aus dem Spalt zwischen Bauteil und Werkstückträger heraus gezogen werden.

Als Gegenstand mit Klebschicht gemäß der vorliegenden Anmeldung sind insbesondere auch modulare Informationssysteme zu verstehen, wie sie in der WO 2005/073883 A2 offenbart sind, auf die bezogen auf mit Klebstoff beschichtetes Trägermaterial vollumfänglich Bezug genommen wird.

Der Gegenstand mit Klebschicht zeichnet sich insbesondere dadurch aus, dass die Klebschicht bevorzugt eine Oberflächenklebrigkeit (gemessen nach DIN EN 1721) von 5 bis 20 cm besitzt. Weiterhin zeichnet sich der Gegenstand mit Klebschicht dadurch aus, dass die Schälkraft auf gestrichenem Druckerpapier als Substrat nach DIN EN 28510 bevorzugt maximal 0,06 N/mm, besonders bevorzugt 0,008 bis 0,016 N/mm beträgt.

### Beispiele

Ohne Einschränkung der Allgemeinheit wird die Erfindung anhand von Beispielen nachfolgend näher beschrieben.

### Zur Beurteilung heran gezogene Prüfmethoden

Es wurden Beschichtungen auf dicht gestrichenem Papier (Drucker Papier A4, 80 g/m² von Xerox) präpariert. Hierbei wurde die Klebstoffzubereitung mit einem Filmziehgerät mit einer nominellen Schichtdicke von ~250 µm und einer Breite von 15 cm auf ein DIN A4 Papier gerakelt. Nach dem Aufrakeln und Trocken der Klebfilme wurden die Benetzungs- und Filmbildungseigenschaften der einzelnen Dispersionen geprüft. Folgender Bewertungsmaßstab für die Benetzung und Filmhomogenität wurde angelegt:

| | |
|---|---|
| +++ | sehr gut |
| ++ | gut |
| + | weniger gut |
| - | schlecht |

Die resultierenden Klebkräfte wurden mit unterschiedlichen Methoden ermittelt.

### A) Oberflächenklebrigkeit:

Die Oberflächenklebrigkeit der Klebstoffe wurde in Anlehnung an die Methode "Rollende Kugel" (DIN EN 1721) ermittelt. Hierbei wird die Strecke gemessen, die eine rollende Kugel auf einer horizontalen Klebschicht zurücklegt, nachdem sie von einer definierten Schräge losgelassen wurde.

Für den Test wurde eine Stahlkugel mit einem Durchmesser von 7 mm (1,4 g) verwendet, die nach jeder Messung mit Aceton gespült und getrocknet wurde. Das Ergebnis wurde aus dem Durchschnitt von drei Messungen ermittelt und in das folgende Bewertungsschema überführt:

### Klebrigkeit (trockener Film):

| | | | | |
|---|---|---|---|---|
| 0 - 5 cm | = | 1 | = | sehr hohe Klebrigkeit |
| 5 - 10 cm | = | 2 | = | gute Klebrigkeit |
| 10 - 15 cm | = | 3 | = | mittlere Klebrigkeit |
| 15 - 20 cm | = | 4 | = | geringe Klebrigkeit |
| 20 - 25 cm | = | 5 | = | keine Klebrigkeit |

### B) Schältest

Die Klebkraft der klebend ausgerüsteten Papiere wurde durch einen Schältest manuell oder in Anlehnung an den 180° Schälversuch nach DIN EN 28510 ermittelt. Hierbei wurden Klebungen mit den Maßen 3 cm x 21 cm hergestellt, wobei der Klebfilm vorher bei Raumtemperatur (für ca. 20 h) konditioniert wurde. Die Klebung wurde sofort nach dem Fügen und Konditionieren geprüft und wie folgt bewertet.

### Haftung (manueller Schältest):

1 = sehr hoch
2 = hoch
3 = mittel
4 = gering
5 = keine

Als Gegenstück zum klebend ausgerüsteten Papier wurde unbeschichtetes Druckerpapier oder Papiere mit handelsüblichen Releaseschichten (nicht selbstklebend ausgerüstete Seite von Haftnotizen der Firma 3M) verwendet. Sind im Folgenden keine Angaben zum Papier enthalten handelt es sich um unbehandeltes Druckerpapier.

### C) Verblock-Test

Für den Verblock-Test wurden 10 Streifen von 12 cm x 1,5 cm mit einer einseitigen Klebschicht hergestellt, übereinander geklebt und 3 Tage mit ca. 11 kg beschwert. Im Anschluss daran wurde geprüft, ob sich die Papierstreifen voneinander trennen lassen oder ob Verblockung auftritt. Diese Prüfung ist für das Abwickelverhalten von Papierrollen bzw. dem Abziehen einzelner Blätter von Blöcken relevant. Es darf kein Verblocken auftreten.

Im Folgenden sind die in den Beispielen verwendeten Polymerdispersionen und anorganischen Partikel beschrieben. Es wurden für die Versuche Dispersionen ausgewählt, deren Klebfestigkeit bereits ohne Zusatz der anorganischen Partikel niedriger ist, als bei vielen anderen Klebdispersionen.

**Tabelle 1: Für die Anwendungsbeispiele ausgewählte Polymerdispersionen**

| **Produktname** | **Beschreibung** | **Polymergehalt** | **Glasübergangtemperatur** | **Viskosität** |
|---|---|---|---|---|
| Planatol HW 450 | Polyacrylat | 58 Gew.-% | ≤ 0 °C | 600 mPa·s (nach Haake RS 50, ISO 3219 bei 20 °C) |
| Collano DP 1606 | Polyacrylat | 55 Gew.-% | -45 °C | 2000 mPa·s (20 °C, Spindel 3, 20 U/min) |
| Collano DP 7027 | Polyacrylat | 55 Gew.-% | ≤ 0 °C | 2000±600 mPa·s (20 °C, Brookfield, Spindel 4, 50 U/min) |
| Collano DP 7024 | Polyacrylat | 55 Gew.-% | ≤ 0 °C | 17±2 Pa·s (20 °C, Brookfield, Spindel 5, 20 U/min) |

**Tabelle 2: Übersicht der für die Anwendungsbeispiele ausgewählten anorganischen Par tikel zu Reduktion der Haftkraft**

| **Hersteller** | **Produktname** | **Beschreibung** |
|---|---|---|
| H.C. Starck | Levasil A200/40% | SiO₂ Spezifische Oberfläche: 200m²/g Teilchengröße: 15nm (Primärpartikelgröße) |
| Quarzwerke GmbH | Quarzmehl SF 800 | SiO₂ Teilchengröße: D50% = 2µm, D95% = 6µm |
| Eduard Merkle GmbH & CO. KG | Ulmer Weiß | Natürliches Calciumcarbonat aus Kalkstein Teilchengröße: D50% = 3µm, D99% = 12pm |
| Omya AG | Omyacarb 6-AL | Natürliches Calciumcarbonat aus Kalkstein Teilchengröße: D50% = 4,8µm, D98% = 27µm |

### Beispiel 1 - Vergleich: Klebeigenschaften der Polymerdispersionen ohne den Zu satz von anorganischen Partikeln

Mit den Polymerdispersionen (Tabelle 1) wurden Schichten auf dicht gestrichenem Papier präpariert und bei Raumtemperatur (25°C) getrocknet. Die Oberflächenklebrigkeit der getrockneten Klebfilme auf Papier und die Haftkraft gegenüber unbeschichtetem Druckerpapier bestimmt. Die Untersuchungsergebnisse sind in Tabelle 3 dargestellt.

**Tabelle 3: Ergebnisse zur Ermittlung der Haft kraft von unterschiedlichen Polymer dispersionen**

| **Klebstoff** | **Benetzung** | **Film-homogenität** | **Oberflä chen-klebrigkeit** | **manueller Schältest** |
|---|---|---|---|---|
| Collano DP 1606 | +++ | +++ | 2 | 3 |
| Planatol HW 450 | +++ | +++ | 2 | 3 |

### Beispiel 2 - erfindungsgemäß:

### Einfluss verschiedener anorganischer Partikel auf die Klebeigenschaften der Klebstoffzubereitungen

Zur Untersuchung der Wirkung von anorganischen Partikeln wurden 5 Gew-% bezogen auf die Polymerdispersion der jeweiligen Partikel in die ausgewählten Klebstoffdispersionen Collano DP 1606 und Planatol HW 450 dispergiert. Es wurden Papiere mit selbstklebender Beschichtung wie in Beispiel 1 beschrieben präpariert und geprüft (Tabelle 4). In allen Fällen wird die gewünschte Reduktion der Klebfestigkeiten erreicht.

**Tabelle 4: Untersuchung zur Verminderung der Haftkraft von Collano DP 1606 und Planatol HW 450 durch Zusatz von 5% Füllstoffen**

| **Zusammensetzung** | **Benetzung** | **Film-homogenität** | **Oberflä chen-klebrigkeit** | **manueller Schältest** |
|---|---|---|---|---|
| Collano DP 1606 mit: | | | | |
| Levasil A200/40% | +++ | +++ | 4 | 3 |
| Quarzmehl SF 800 | +++ | +++ | 3 | 3 |
| Omnicarb 6-A1 | +++ | +++ | 4 | 3 |
| Ulmer Weiß | +++ | +++ | 3 | 3 |
| Planatol HW 450 mit: | | | | |
| Levasil A200/40% | +++ | ++ | 4 | 4 |
| Quarzmehl SF 800 | +++ | ++ | 3 | 4 |
| Omnicarb 6-A1 | +++ | ++ | 3 | 4 |
| Ulmer Weiß | +++ | ++ | 3 | 3 |

### Beispiel 3: Variation der Konzentration der anorganischen Partikel

In den folgenden Untersuchungen wurde die Konzentration an anorganischen Partikeln als Zusatzstoffe zur Einstellung der Klebeigenschaften variiert und die resultierenden Eigenschaften der Klebfilme ermittelt.

Die Präparation erfolgte wie in den vorherigen Beispielen beschrieben. Die Zusammensetzung der einzelnen Formulierungen ist in der folgenden Tabelle 5 beschrieben.

**Tabelle 5: Klebeigenschaften von Planatol HW 450 mit Zusatz verschiedener anorganischer Partikel**

| **Zusammensetzung** | **Benet zung** | **Film-homogenität** | **Oberflä chen-klebrigkeit** | **Schältest 99. Releasepapier** |
|---|---|---|---|---|
| Planatol HW 450 mit: | | | | |
| 0,5% Quarzmehl SF 800 | +++ | +++ | 2 | 3 |
| 1% Quarzmehl SF 800 | +++ | +++ | 3 | 3 |
| 3% Quarzmehl SF 800 | +++ | +++ | 3 | 3 |
| 5% Quarzmehl SF 800 | +++ | +++ | 3 | 3-4 |
| 6% Quarzmehl SF 800 | +++ | +++ | 3 | 3 |
| 9% Quarzmehl SF 800 | +++ | +++ | 4 | 2 |
| 10% Quarzmehl SF 800 | +++ | +++ | 3 | 2 |
| 12% Quarzmehl SF 800 | +++ | +++ | 4 | 2 |
| 15% Quarzmehl SF 800 | +++ | +++ | 4 | 2 |
| 18% Quarzmehl SF 800 | +++ | +++ | 4 | 2 |
| 20% Quarzmehl SF 800 | +++ | +++ | 4 | 2 |

Die Klebfilme zeigen unter einem Anpressdruck von ca. 100 N keine Verblockungsneigung und besitzen gegenüber unbehandeltem Papier ebenfalls eine geringe Haftkraft.

### Beispiel 4: Untersuchung von Collano DP 7024 als Polymerdispersion

In diesem Beispiel wird die Haftkraft von Collano DP 7024 durch Zusatz von Levasil A200 eingestellt. Die Ergebnisse sind in Tabelle 6 dargestellt. Levasil A200, also ein Produkt mit nanoskaligen anorganischen Partikeln, hat einen großen Einfluss auf die Klebkraft. Mit diesem Produkt lässt sich die Klebkraft von Collano DP 7024 sehr gut einstellen. Die Klebkraft konnte soweit herabgesetzt werden, dass sie über die vorhandene Messtechnik (kleinste verfügbare Kraftmessdose) nicht mehr ermittelbar war.

**Tabelle 6: Einstellung der Haftkraft von Collano DP 7024**

| **Zusammensetzung** | **Homogenität** | **mittlere Schälkraft [N/mm]** |
|---|---|---|
| 10% Levasil A200/ 40% | +++ | 0,01 |
| 15% Levasil A200/ 40% | +++ | 0,01 |
| 20% Levasil A200/ 40% | +++ | 0,00 |
| 25% Levasil A200/ 40% | +++ | 0,00 |

Die in diesem Beispiel hergestellten haftklebend ausgerüsteten Papiere zeigten in dem Verblockungstest keine Verblockung. Nach der Prüfung ließe sich die einzelnen Blätter weiterhin leicht voneinander trennen. Ebenso lassen sich mit diesen Rezepturen ausgerüstete Papiere sehr leicht und rückstandsfrei von Metallen entfernen. Ein nennenswerter Klebstoffübertrag beim maschinellen Transport von haftklebend ausgerüsteten Papierrollen, z.B. in Registrierkassen, ist demzufolge nicht zu erwarten.

## Patentansprüche

1. Klebstoffzusammensetzung zur Beschichtung von flächigen Gegenständen enthaltend eine wässrige Polymerdispersion, wobei das in der Polymerdispersion enthaltene Polymer eine Glasübergangstemperatur kleiner 20 °C aufweist, sowie anorganische Partikel mit einer mittleren Primärpartikelgröße zwischen 1 nm und 50 µm.

2. Klebstoffzusammensetzung nach Anspruch 1,
**dadurch gekennzeichnet, dass** die wässrige Polymerdispersion einen Feststoffgehalt von 10 bis 70 % aufweist.

3. Klebstoffzusammensetzung nach einem der vorhergehenden Ansprüche,
**dadurch gekennzeichnet, dass** der Anteil der anorganischen Partikel, bezogen auf den Polymergehalt des als Polymerdispersion vorliegenden Polymers 0,1 bis 50 Gew.-%, bevorzugt 0,5 bis 15 Gew.-% beträgt.

4. Klebstoffzusammensetzung nach einem der vorhergehenden Ansprüche,
**dadurch gekennzeichnet, dass** die Partikel der Polymerdispersion eine mittlere Größe von 20 bis 700 nm, bevorzugt 50 bis 400 nm, besonders bevorzugt von 50 bis 200 nm aufweisen.

5. Klebstoffzusammensetzung nach einem der vorhergehenden Ansprüche,
**dadurch gekennzeichnet, dass** das Polymer ausgewählt ist aus der Gruppe enthaltend Polyisopren, Polybutadien, Polyisobutylen, Polydimethylsiloxan, Polyurethan, Polyacrylat, Polymethacrylat, Polymeren auf Basis von Acrylsäure, Polymeren auf Basis von Methacrylsäure, Polymeren auf Basis von Styrol, acrylhaltigen Copolymeren, methacrylhaltigen Copolymeren und/oder Mischungen hiervon.

6. Klebstoffzusammensetzung nach einem der vorhergehenden Ansprüche,
**dadurch gekennzeichnet, dass** als Polymer kein Polymer auf Basis von Chloropren eingesetzt wird.

7. Klebstoffzusammensetzung nach einem der vorhergehenden Ansprüche,
**dadurch gekennzeichnet, dass** die anorganischen Partikel eine mittlere Primärpartikelgröße zwischen 1 nm und 5 µm, bevorzugt zwischen 5 nm und 100 nm aufweisen.

8. Klebstoffzusammensetzung nach einem der vorhergehenden Ansprüche,
**dadurch gekennzeichnet, dass** die anorganischen Partikel ausgewählt sind aus der Gruppe bestehend aus Oxiden, Silikaten, Metallsalzen und/oder Mischungen hiervon.

9. Verfahren zur Herstellung eines beschichteten flächigen Gegenstandes, bei dem ein flächiges Trägermaterial mit einer Klebstoffzusammensetzung nach einem der vorhergehenden Ansprüche beschichtet und anschließend eine Trocknung des beschichteten Trägermaterials durchgeführt wird.

10. Verfahren nach dem vorhergehenden Anspruch,
**dadurch gekennzeichnet, dass** das Trägermaterial ausgewählt ist aus der Gruppe bestehend aus Papier, Thermopapier, Pappe, Kunststofffolie, Verbundfolie, Schutzfolie und/oder Mischungen hiervon.

11. Verfahren nach einem der beiden vorhergehenden Ansprüche,
**dadurch gekennzeichnet, dass** das Trägermaterial ein Flächengewicht zwischen 5 und 250 g/m², bevorzugt zwischen 10 und 100 g/m² aufweist.

12. Verfahren nach einem der Ansprüche 9 bis 11,
**dadurch gekennzeichnet, dass** das beschichtete Trägermaterial als Stapel und/oder Rolle vorliegt.

13. Verfahren nach einem der Ansprüche 9 bis 12,
**dadurch gekennzeichnet, dass** das Trägermaterial auf der unbeschichteten Seite keine Anti-HaftSchicht aufweist.

## Claims

1. Adhesive composition for coating plane objects containing an aqueous polymer dispersion, wherein the polymer contained in the polymer dispersion has a glass transition temperature of less than 20°C, and also inorganic particles with an average primary particle size of between 1 nm and 50 µm.

2. Adhesive composition according to claim 1, **characterised in that** the aqueous polymer dispersion has a solid content of 10 to 70%.

3. Adhesive composition according to one of the preceding claims, **characterised in that** the proportion of inorganic particles in relation to the polymer content of the polymer present as polymer dispersion amounts to 0.1 to 50% by weight, preferably 0.5 to 15% by weight.

4. Adhesive composition according to one of the preceding claims, **characterised in that** the particles of the polymer dispersion have an average size of 20 to 700 nm, preferably 50 to 400 nm, particularly preferred 50 to 200 nm.

5. Adhesive composition according to one of the preceding claims, **characterised in that** the polymer is selected from the group including polyisoprene, polybutadiene, polyisobutylene, polydimethylsiloxane, polyurethane, polyacrylate, polymethacrylate, acrylic acid-based polymers, methacrylic acid-based polymers, styrene-based polymers, acrylic copolymers, methacrylic copolymers and/or mixtures thereof.

6. Adhesive composition according to one of the preceding claims, **characterised in that** no chloroprene-based polymer is used as polymer.

7. Adhesive composition according to one of the preceding claims, **characterised in that** the inorganic particles have an average primary particle size of between 1 nm and 5 µm, preferably between 5 nm and 100 nm.

8. Adhesive composition according to one of the preceding claims, **characterised in that** the inorganic particles are selected from the group comprising oxides, silicates, metal salts and/or mixtures thereof.

9. Method for the production of a coated plane object, in which a plane support material is coated with an adhesive composition according to one of the preceding claims and then drying of the coated support material is conducted.

10. Method according to the preceding claim, **characterised in that** the support material is selected from the group comprising paper, thermal paper, cardboard, plastic foil, composite foil, protective foil and/or mixtures thereof.

11. Method according to one of the preceding claims, **characterised in that** the support material has a grammage of between 5 and 250 g/m², preferably between 10 and 100 g/m².

12. Method according to one of claims 9 to 11, **characterised in that** the coated support material is provided as a stack and/or roll.

13. Method according to one of claims 9 to 12, **characterised in that** the support material has no non-stick layer on the uncoated side.

## Revendications

1. Composition d'adhésif pour le revêtement d'objets plans renfermant une dispersion polymère aqueuse, le polymère renfermé dans cette dispersion polymère présentant une température de transition vitreuse inférieure à 20°C, ainsi que des particules inorganiques ayant une granulométrie primaire moyenne comprise entre 1 nm et 50 µm.

2. Composition d'adhésif conforme à la revendication 1,
**caractérisée en ce que**
la dispersion polymère aqueuse présente une teneur en matières solides de 10 à 70 %.

3. Composition d'adhésif conforme à l'une des revendications précédentes,
**caractérisée en ce que**
la fraction de particules inorganiques, par rapport à la teneur en polymère du polymère présent sous la forme de la dispersion polymère, s'élève à 0,1 à 50 % en poids, de préférence à 0,5 à 15 % en poids.

4. Composition d'adhésif conforme à l'une des revendications précédentes,
**caractérisée en ce que**
les particules de la dispersion polymère présentent une granulométrie moyenne de 20 à 700 nm, de préférence de 50 à 400 nm, et de façon particulièrement préférée de 50 à 200 nm.

5. Composition d'adhésif conforme à l'une des revendications précédentes,
**caractérisée en ce que**
le polymère est choisi dans le groupe renfermant les polymères suivants : polyisoprène, polybutadiène, polyisobutylène, polydiméthylsiloxane, polyuréthane, polyacrylate, polyméthacrylate, polymères à base d'acide acrylique, polymères à base d'acide méthacrylique, polymères à base de styrène, copolymères acryliques, copolymères méthacryliques et/ou leurs mélanges.

6. Composition d'adhésif conforme à l'une des revendications précédentes,
**caractérisée en ce que**
en tant que polymère, on n'utilise pas de polymère à base de chloroprène.

7. Composition d'adhésif conforme à l'une des revendications précédentes,
**caractérisée en ce que**
les particules inorganiques présentent une granulométrie primaire moyenne comprise entre 1 nm et 5 µm, de préférence entre 5 nm et 100 nm.

8. Composition d'adhésif conforme à l'une des revendications précédentes,
**caractérisée en ce que**
les particules inorganiques sont choisies dans le groupe formé par les oxydes, les silicates, les sels métalliques et/ou leurs mélanges.

9. Procédé d'obtention d'un objet plan revêtu selon lequel on recouvre un matériau support plan, d'une composition d'adhésif conforme à l'une des revendications précédentes, puis on effectue un séchage du matériau support ainsi revêtu.

10. Procédé conforme à la revendication précédente,
**caractérisé en ce que**
le matériau support est choisi dans le groupe formé par le papier, le thermopapier, le carton, les films en matière synthétique, les films composites, les films antiabrasion et/ou leurs mélanges.

11. Procédé conforme à l'une des revendications précédentes,
**caractérisé en ce que**
le matériau support présente un grammage compris entre 5 et 250 g/m², de préférence entre 10 et 100 g/m².

12. Procédé conforme à l'une des revendications 9 à 11,
**caractérisé en ce que**
le matériau support revêtu se présente sous la forme d'une pile ou d'un rouleau.

13. Procédé conforme à l'une des revendications 9 à 12,
**caractérisé en ce que**
le matériau support ne comporte pas de couche antiadhérante sur sa face non revêtue.
